# EUROPÄISCHE PATENTSCHRIFT

(11) **EP 4 102 098 B1**
(45) Veröffentlichungstag und Bekanntmachung des Hinweises auf die Patenterteilung: **08.07.2026**
(21) Anmeldenummer: 22167169.6
(22) Anmeldetag: 07.04.2022
(51) Int. Cl.: F16F 13/14, F16F 13/10

(54) **HYDROLAGER**
HYDRAULIC BEARING
PALIER HYDRAULIQUE

(30) Priorität: 10.06.2021 DE 102021205881
(43) Veröffentlichungstag der Anmeldung: 14.12.2022
(73) Patentinhaber: ContiTech Vibration Control GmbH, 30175 Hannover (DE)
(72) Erfinder: Busch, Jirka, 30165 Hannover (DE)
(74) Vertreter: Bird & Bird LLP - Hamburg

(56) Entgegenhaltungen:
- JP-A- 2018 017 304
- US-A- 5 516 084
- US-A1- 2012 205 845

## Beschreibung

Die Erfindung betrifft ein Hydrolager mit einer Drosseleinheit und einer Arbeits- und einer Ausgleichskammer, wobei die Kammern mit Flüssigkeit gefüllt sind, und die Arbeitskammer von der Ausgleichskammer durch die Drosseleinheit getrennt sind, wobei die Drosseleinrichtung mindestens einen Überströmkanal aufweist, mittels dessen die beiden Kammern flüssigkeitsführend miteinander verbunden sind.

Für die Dämpfung von Schwingungen schwingungsfähiger Komponenten von Vorrichtungen ist es bekannt, Lagerungen zu verwenden, welche die Übertragung dieser Schwingungen zumindest teilweise nach Amplitude und bzw. oder nach Frequenz reduzieren können. Hierzu können beispielsweise für die Lagerung von Motoren in Kraftfahrzeugen Gummi-Metalllager und Hydrolager eingesetzt werden. Ein Gummi-Metalllager stellt eine Anordnung wenigstens eines elastisch verformbaren Gummielements zwischen üblicherweise zwei Metallelementen dar, welche jeweils an einer der Komponenten bzw. der Vorrichtung feststehend montiert werden, zwischen welchen die Schwingungen zu dämpfen sind, was dann durch die Elastizität des Gummielements erreicht wird. Bei einem Hydrolager wird zusätzlich zwischen den Metallelementen und dem Gummielement eine Arbeitskammer gebildet und mit einem Fluid wie z.B. mit einer Hydraulikflüssigkeit gefüllt, welche über einen Drosselkanal in eine Ausgleichskammer des Hydrolager gelangen kann. Über die Gestaltung des Drosselkanals kann eine zusätzliche Dämpfung mittels der Hydraulikflüssigkeit erreicht werden.

Insbesondere durch die Hybridisierung des Antriebsstranges, d.h. durch die kombinierte Verwendung zweier Antriebsarten, werden die Anforderungen an die Lagerkomponenten erhöht, da höhere Massen und höhere Kräfte schwingungsdämpfend zu lagern sind.

Hierbei ist bekannt, dass Lagerelemente mit hydraulischer Dämpfung den Zielkonflikt zwischen einer Verbesserung der Akustik für den Fahrer und weitere Insassen zum einen und der Fahrbahnanregung von Schwingungen zum anderen vergleichsweise wirkungsvoll beseitigen können. Durch die zunehmend höheren Anforderungen in Bezug auf die Dämpfung der größer werdenden schwingungsfähigen Massen sind teilweise jedoch immer längere Kanalsysteme des Drosselkanals der Hydrolager erforderlich.

Weiterhin ist bekannt, dass hierfür Doppelstockkanäle eingesetzt werden können. Hierbei umläuft der Dämpfungskanal in einem größeren Winkel als 360° um die Drosselscheibe.

Beispielsweise beschreibt das EP 0 354 381 B1 ein hydraulisch gedämpftes Motorlager mit zwei mit Flüssigkeit gefüllten Kammern, die über einen in einer Zwischenplatte eingelassenen mehrwendeligen Überströmkanal hydraulisch miteinander in Verbindung stehen. Zur einfachen Herstellung dieser Zwischenplatte und zur leichten Einstellung der Überströmkanallänge ist vorgesehen, dass die Zwischenplatte aus zwei tassenförmigen, mit ihren Bodenflächen gegeneinanderliegenden Blechteilen und mit nach außen gewölbtem Rand sowie einer dazwischenliegenden ebenen Platte mit gleichem Außendurchmesser besteht, wobei diese Zwischenplatte am Außenumfang abdichtend in das zylindrische Lagergehäuse eingesetzt ist. Die tassenförmigen Blechteile weisen dabei im zylindrischen Abschnitt je eine radial nach innen gerichtete Öffnung und die ebene Platte im Randbereich außerhalb der Bodenflächen eine axiale Durchtrittsöffnung auf, wobei im so gebildeten oberen und unteren Teilkanal jeweils ein Umfangsbereich zwischen radialer und axialer Öffnung abgeschottet ist. Die beiden tassenförmigen Blechteile und die dazwischenliegende ebene Platte sind miteinander vernietet.

In der DE 10 2014 202 999 A1 ist ein gattungsgemäßes Hydrolager offenbart, bei dem der Überströmkanal durch eine Abdeckscheibe begrenzt ist und die Abdeckscheibe eine Öffnung aufweist, die mit dem Überströmkanal in Verbindung steht und bei Verdrehung der Abdeckscheibe die Öffnung die wirksame Länge des Überströmkanals veränderbar ist.

Allen genannten bekannten Lösungen ist es gemeinsam, dass sie eine rotationssymmetrische, im Wesentlichen zylindrische Form aufweisen. Bedingt durch den teilweise begrenzten Einbauraum in modernen Kraftfahrzeugen ist diese Form nicht immer optimal, es wäre wünschenswert, wenn Hydrolager der genannten Art auch in rechteckiger Grundform zur Verfügung stünden, um den Bauraum besser ausnutzen zu können.

Die JP 2018 017304 A beschreibt eine fluidabgedichtete vibrationsfeste Vorrichtung, die mit einer ersten und einer zweiten Fluidkammer versehen ist, um eine relative Druckänderung durch Eingabe von Vibration in ein erstes Befestigungselement und ein zweites Befestigungselement zu erzeugen, die durch einen gummielastischen Hauptkörper verbunden sind. Ein Trennelement zum Trennen der ersten und zweiten Fluidkammern ist mit mehreren Anordnungsbereichen versehen, in denen ein beweglicher Film angeordnet ist, um zu bewirken, dass Drücke in den ersten und zweiten Fluidkammern auf jeweils eine Oberfläche aufgebracht werden, und wiederum umfasst ein Öffnungsdurchgang, der die ersten und zweiten Fluidkammern miteinander verbindet, einen Zwischenfilm-Durchgangsabschnitt, der sich zwischen den angrenzenden Anordnungsbereichen erstreckt, und einen Außenumfangs-Durchgangsabschnitt, der sich an einem Außenumfang jedes der Anordnungsbereiche von beiden Enden des Zwischenfilm-Durchgangsabschnitts aus erstreckt.

Der Erfindung lag die Aufgabe zugrunde, ein Hydrolager der eingangs geschilderten Art mit etwa rechteckiger Grundform zu schaffen.

Diese Aufgabe wird dadurch gelöst, dass das Hydrolager eine im wesentlichen rechteckige Grundform aufweist, wobei die Drosseleinrichtung eine Drosselplatte mit Überströmkanal und zwei in Umfangsrichtung drehbare Abdeckscheiben mit jeweils einer Bohrung aufweist und der Überströmkanal in Form einer "8"ausgebildet ist und eine erst Hälfte der 8 an der Oberseite der Drosselplatte und eine zweit Hälfte der "8" an der Unterseite der Drosselplatte angeordnet ist, wobei jede Hälfte des Überströmkanals an einem Ende verschlossen ist und am gegenüberliegenden Ende durch die Drosselplatte hindurch mit der weiteren Überströmkanalhälfte in hydraulischer Wirkverbindung steht, wobei die Verbindungsstelle der beiden Überströmkanalhälften quasi im Kreuzungspunkt der "8" liegen und die Überströmkanalhälften in der Längsausdehnung der rechteckigen Drosselplatte sich in der Projektion gegenüber liegen, sodass die Rechteckform der Drosselplatte optimal ausgenutzt ist und jede Hälfte des Überströmkanals mit je einer Abdeckscheibe zu einem geschlossenen Hohlraum abgedeckt ist, wobei die jeweilige Bohrung der jeweiligen Abdeckscheibe mit dem der jeweiligen Abdeckscheibe zugeordneten Überströmkanalhälfte in hydraulischer Verbindung steht.

Durch die Bohrung in der der Arbeitskammer des Hydrolagers zugeordneten Abdeckscheibe kann die Flüssigkeit von der Arbeitskammer des Hydrolagers in den Überströmkanal ein- und durch diesen hindurch auf die der Ausgleichskammer des Hydrolagers zugeordnete Seite der Drosselplatte strömen und durch die Bohrung der dort angeordneten Abdeckscheibe in die Ausgleichskammer des Hydrolagers strömen.

Werden die Abdeckscheiben gegen die Drosselplatte verdreht, kommen die Bohrungen der Abdeckscheiben je nach Drehrichtung entweder dem verschlossenen Ende der jeweiligen Überströmkanalhälfte näher, was die wirksame Länge des gesamten Überströmkanals verlängert oder sie nähern sich dem Verbindungspunkt der beiden Überströmkanalhälften, sodass die wirksame Länge des gesamten Überströmkanals verkürzt wird. Liegen die beiden Bohrungen der Abdeckscheiben und der Übergangspunkt der beiden Überströmkanalhälften übereinander, ist die wirksame Länge des Überströmkanal auf null reduziert.

Dabei sind die beiden Abdeckscheiben unabhängig voneinander stufenlos drehbar, sodass eine optimale Anpassung des Hydrolagers an die Belastungsverhältnisse möglich ist.

In einer Weiterbildung der Erfindung weist die Drosselplatte in den Bereichen, die für die Lage der Abdeckscheiben vorbestimmt sind, jeweils eine Vertiefung auf, deren Tiefe mit der Dicke der Abdeckscheiben korrespondiert und deren Durchmesser mit den Durchmessern der Abdeckscheiben korrespondiert und in die die Abdeckscheiben jeweils eingelegt sind.

Diese Vertiefungen dienen der Führung der Abdeckscheiben, sodass diese im Betrieb des Hydrolagers nicht gegenüber der Lage der Überströmkanalhälften verschoben werden.

In einer Weiterbildung der Erfindung weist die Drosselplatte und weisen die Abdeckscheiben zentrisch zu den Vertiefungen jeweils Durchbrüche auf, und weist die Drosseleinrichtung im Bereich der Durchbrüche zwischen der Drosselplatte und den Abdeckscheiben jeweils eine Entkoppelungsmembran auf.

Über die Durchbrüche in den Abdeckscheiben und der Drosselplatte korrespondiert die Flüssigkeit im Hydrolager mit den Entkoppelungsmembranen, sodass auch hochfrequente Schwingungen im Hydrolager dämpfbar sind.

In einer Weiterbildung der Erfindung weisen die Abdeckscheiben zentrisch im Bereich der Durchbrüche jeweils eine Kröpfung auf.

In einer Weiterbildung der Erfindung sind die Abdeckscheiben so angeordnet, dass ihre Kröpfung beim Einlegen in die Drosselplatte der jeweils korrespondierenden Entkoppelungsmembranen zugewandt sind.

Durch diese Anordnung lässt sich die Vorspannung der Entkoppelungsmembranen erhöhen.

In einer Weiterbildung der Erfindung sind die Abdeckscheiben so angeordnet, dass ihre Kröpfung beim Einlegen in die Drosselplatte von der jeweils korrespondierenden Entkoppelungsmembranen abgewendet ist.

Diese Anordnung hat den Vorteil, dass für die Entkoppelungsmembranen mehr Raum zum Schwingen zur Verfügung steht, sodass auch größere Amplituden bei hohen Frequenzen noch abgedämpft werden können.

In einer Weiterbildung der Erfindung weisen die Abdeckscheiben an ihrem Außenumfang radial nach außen ragende Verzahnungen auf und weist die Drosselplatte im Bereich der Vertiefungen für die Abdeckscheiben eine radial nach innen in Richtung auf die Abdeckscheiben gerichtete Verzahnung auf, wobei die jeweilige Verzahnung der Abdeckscheiben und die jeweilige Verzahnung der Drosselplatte bei eingelegten Abdeckscheiben miteinander in Eingriff stehen.

Diese Anordnung hat den Vorteil, dass die Abdeckscheiben in ihrer vorbestimmten Lage während des Betriebes nicht unbeabsichtigt verdreht werden.

In einer Weiterbildung der Erfindung sind die in die Vertiefungen der Drosselplatte eingelegten Abdeckscheiben zentrisch mit der Drosselplatte verbunden, derart, dass sie nicht mehr von der Drosselplatte abhebbar sind.

Diese Anordnung hat den Vorteil, dass die Abdeckscheiben ihre Lage gegenüber der Drosselplatte im Betrieb nicht verändern und auch nicht von der Drosselplatte abheben können, sodass der Überströmkanal von den Abdeckscheiben zuverlässig abgedeckt bleibt.

Anhand der Zeichnung wird nachstehend ein Ausführungsbeispiel der Erfindung näher erläutert.
Die Fig. 1 zeigt den prinzipiellen Aufbau eines Hydrolagers mit Drosseleinrichtung im Längsschnitt,
die Fig. 2 zeigt die Drosseleinrichtung in Explosionsdarstellung,
die Fig. 3 zeigt eine vereinfachte Draufsicht auf eine Drosselplatte und
die Fig. 4 zeigt einen Längsschnitt durch die Drosseleinrichtung.

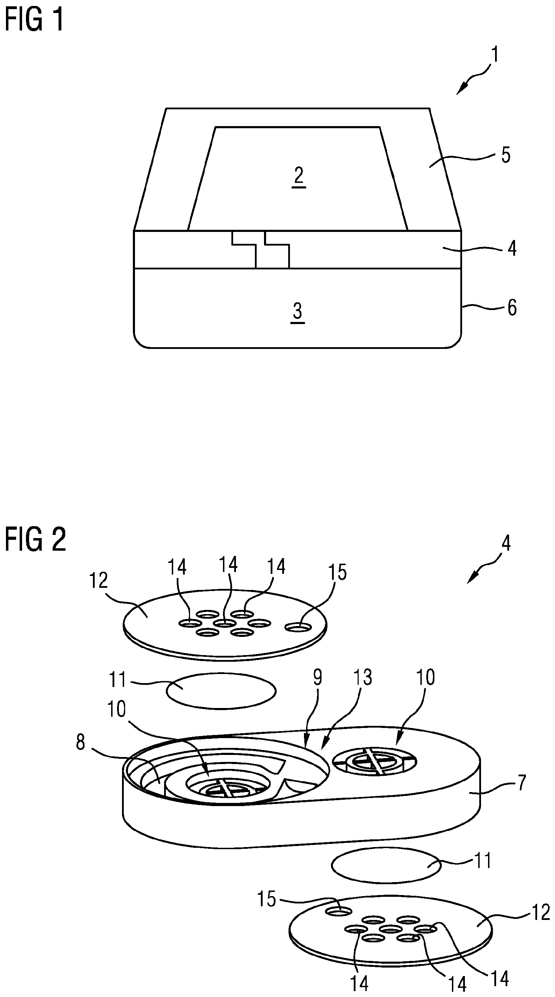

Fig.1 zeigt den prinzipiellen Aufbau eines Hydrolagers 1 im Längsschnitt. Das Hydrolager 1 weist eine Arbeitskammer 2 und eine Ausgleichskammer 3 auf, die von einer Drosseleinrichtung 4 voneinander getrennt sind. Die Drosseleinrichtung 4 ist hier nur stark vereinfacht im Prinzip dargestellt. Die Arbeitskammer 2 ist von einem elastischen Element 5 gegen die Umgebung abgegrenzt und mit einem hier nicht gezeigten Fluid gefüllt. Die Ausgleichskammer 3 ist mit einer elastischen Ausgleichsmembran 6 ebenfalls gegen die Umgebung abgegrenzt. Weitere Details sind hier nicht dargestellt, da sie dem Fachmann bekannt sind.

In der Fig.2 ist die Drosseleinrichtung 4 in einer Explosionsdarstellung mit den wesentlichen Bauteilen gezeigt. Eine Drosselplatte 7 weist einen Überströmkanal 8 auf, von dem hier nur die der hier nicht gezeigten Arbeitskammer zugeordneten Hälfte gezeigt ist. Die Drosselplatte 7 weist weiterhin 2 kreisförmige Vertiefungen 9 auf, von der hier ebenfalls nur die der Arbeitskammer zugeordnete sichtbar ist.

Sinngemäß befindet sich in der Kennzeichnungspflicht unteren Seite der Drosselplatte 7, die der hier ebenfalls nicht gezeigten Ausgleichskammer zugeordnet ist, eine Punkt symmetrische Anordnung von Überströmkanalhälfte und Vertiefung, die hier nicht sichtbar sind.

Mittig zu den Vertiefungen 9 ist jeweils ein Durchbruch 10 in der Drosselplatte 7 angeordnet. Zwei Entkoppelungsmembranen 11 kommen in zusammengebautem Zustand jeweils über die Durchbrüche 10 zu liegen, sodass diese mit den Entkoppelungsmembranen 11 abgedeckt sind. Die Entkoppelungsmembranen 10 sind in zusammengebautem Zustand in ihrem Randbereich fest und fluiddicht mit der Drosselplatte 7 verbunden, beispielsweise verschweißt oder verklebt. Zwei Abdeckscheiben 12 sind im Zusammenbau in den Vertiefungen 9 angeordnet und überdecken dabei die Überströmkanalhälften 8, sodass die Überströmkanalhälften 8 geschlossene Kanäle bilden.

In einem Übergangsbereich 13 sind die der Arbeitskammer zugeordnete Überströmkanalhälfte 8 und die auf der unteren Seite der Drosselplatte 7, der Ausgleichskammer zugeordneten Überströmkanalhälfte 8 zu einem vollständigen Überströmkanal verbunden.

Die Abdeckscheiben 12 weisen mittig mehrere Bohrungen 14 auf, die über den Entkoppelungsmembranen 11 angeordnet sind. Weiter weisen die Abdeckscheiben 12 je eine Durchströmbohrung 15 auf, die in montiertem Zustand über der jeweiligen Überströmkanalhälfte zu liegen kommen und einen Durchtritt von Flüssigkeit in den Überströmkanal 8 ermöglichen. Die Abdeckscheiben 12 sind in ihren zugeordneten Vertiefungen 9 drehbar gelagert, sodass die Durchströmbohrung 15 auf einer mit der jeweiligen Überströmkanalhälfte 8 korrespondierenden Kreisbahn über dem Überströmkanal 8 verschiebbar sind.

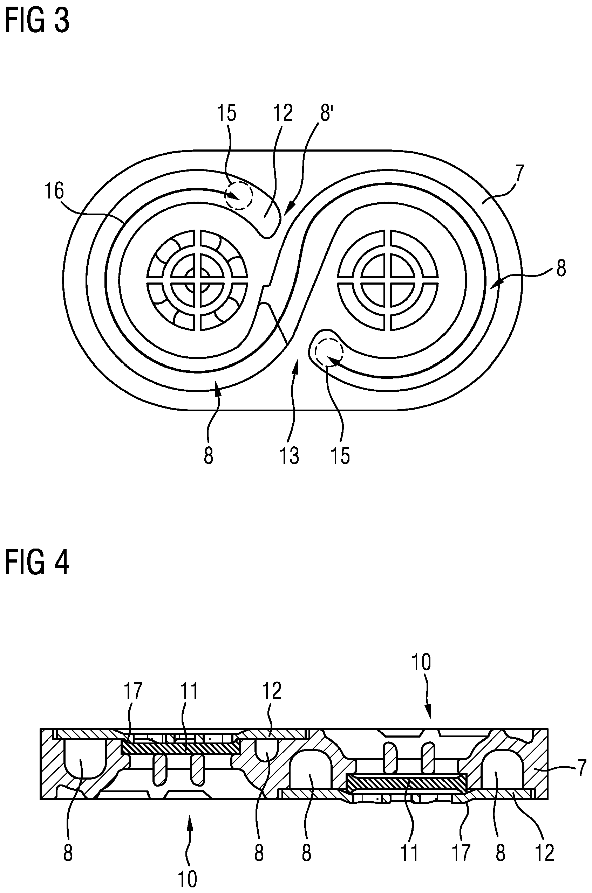

In der Fig 3. ist eine vereinfachte Draufsicht auf die Drosselplatte 7 gezeigt, bei der auf der in Zeichnungslage linken Seite der Drosselplatte 7 diese aufgeschnitten dargestellt ist, sodass die der Unterseite der Drosselplatte 7 angeordnete Überströmkanalhälfte 8 sichtbar ist. Die Überströmkanalhälfte 8 ist an ihrem in Umfangsrichtung ersten Ende 8' verschlossen und bildet einen teilkreisförmigen Kanal, der von der Unterseite durch eine der hier gestrichelt dargestellten Abdeckscheiben 12 abgedeckt ist. Die Durchströmbohrung 15 erlaubt ein durchströmen von Flüssigkeit aus der hier nicht gezeigten Ausgleichskammer des Hydrolagers in den Überströmkanal 8 oder umgekehrt. Zur Vereinfachung sind hier die Entkoppelungsmembranen nicht dargestellt.

Im Übergangsbereich 13 geht die untere Überströmkanalhälfte 8 in die obere Überströmkanalhälfte 8 über. Die obere Überströmkanalhälfte 8 ist ebenfalls von einer der Abdeckscheiben 12 zu einem geschlossenen Kanal abgedeckt, wobei nur die Durchströmbohrung 15 dieser Abdeckscheibe schematisch dargestellt ist.

Die Überströmkanalhälften 8 bilden mit dem Übergangsbereich 13 also quasi einen "8"-förmigen Überströmkanal 8, durch den Flüssigkeit aus der Arbeitskammer in die Ausgleichskammer und zurückfließen kann. Dies ist hier durch den Doppelpfeil 16 symbolisiert.

Durch Verdrehen der Abdeckscheiben 12 verlagern sich die Durchströmbohrungen 15 über dem Überströmkanal 8, sodass die wirksame Länge des Überströmkanals 8 stufenlos verstellbar ist.

**In** der Fig. 4 ist ein Längsschnitt durch die Drosseleinrichtung 4 gezeigt. Die in der Drosselplatte 7 angeordneten Überströmkanalhälften 8 sind jeweils mit einer Abdeckscheibe 12 abgedeckt. Zwischen den Abdeckscheiben 12 und der Drosselplatte 7 sind im Bereich der Durchbrüche 10 jeweils eine Entkopplungsmembran 11 angeordnet, die die Durchbrüche 10 randseitig fluiddicht abdecken.

Die Abdeckscheiben 12 weisen bei dieser Ausführungsform eine Kröpfung 17 auf. Bei der hier oben angeordneten Abdeckscheibe 12 weist die Kröpfung 17 in Richtung auf die Entkoppelungsmembran 11, sodass diese gegen die Drosselplatte 7 vorgespannt ist. Bei der hier unten angeordneten Abdeckscheibe 12 weist dagegen die Kröpfung 17 von der ihr zugeordneten Entkoppelungsmembran weg, sodass hier ein Freiraum für größere Schwingungsamplituden zur Verfügung steht. Auf diese Weise ist auch die Entkoppelung für Frick Winterschwingungen des Hydrolagers 1 in gewissen Stufen verstellbar.

### Bezugszeichenliste

### (Teil der Beschreibung)

- 1: Hydrolager
- 2: Arbeitskammer des Hydrolagers 1
- 3: Ausgleichskammer des Hydrolagers 1
- 4: Drosseleinrichtung
- 5: elastisches Element der Arbeitskammer 2
- 6: Ausgleichsmembran der Ausgleichskammer 3
- 7: Drosselplatte
- 8: Überströmkanal, Überströmkanalhälften
- 8': verschlossenes Ende der Überströmkanalhälften 8
- 9: Vertiefungen in der Drosselplatte 7
- 10: Durchbrüche in der Drosselplatte 7
- 11: Entkoppelungsmembranen
- 12: Abdeckscheiben
- 13: Übergangsbereich des Überströmkanals 8
- 14: Bohrungen in den Abdeckscheiben 12
- 15: Durchströmbohrungen der Abdeckscheiben 12
- 16: Fluss eines Fluids im Überströmkanal 8
- 17: Kröpfung der Abdeckscheiben 12

## Patentansprüche

1. Hydrolager mit einer Drosseleinrichtung (4) und einer Arbeits- (2) und einer Ausgleichskammer (3), wobei die Kammern mit Flüssigkeit gefüllt sind, und die Arbeitskammer (2) von der Ausgleichskammer (3) durch die Drosseleinrichtung (4) getrennt sind, wobei die Drosseleinrichtung (4) mindestens einen Überströmkanal (8) aufweist, mittels dessen die beiden Kammern flüssigkeitsführend miteinander verbunden sind, **dadurch gekennzeichnet, dass** das Hydrolager (1) eine im wesentlichen rechteckige Grundform aufweist, wobei die Drosseleinrichtung (4) eine Drosselplatte (7) mit Überströmkanal (8) und zwei in Umfangsrichtung drehbare Abdeckscheiben (12) mit jeweils einer Bohrung (15) aufweist und der Überströmkanal (8) in Form einer "8" ausgebildet ist und eine erste Hälfte (8) der "8" an der Oberseite der Drosselplatte (7) und eine zweite Hälfte der "8" an der Unterseite der Drosselplatte (7) angeordnet ist, wobei jede Hälfte (8) des Überströmkanals (8) an einem Ende (8 ,) verschlossen ist und am gegenüberliegenden Ende (13) durch die Drosselplatte (7) hindurch mit der weiteren Überströmkanalhälfte (8) in hydraulischer Wirkverbindung steht, wobei die Verbindungsstelle (13) der beiden Überströmkanalhälften quasi im Kreuzungspunkt der "8" liegen und die Überströmkanalhälften (8) in der Längsausdehnung der rechteckigen Drosselplatte (7) sich in der Projektion gegenüber liegen, sodass die Rechteckform der Drosselplatte (7) optimal ausgenutzt ist und jede Hälfte des Überströmkanals (8) mit je einer Abdeckscheibe (12) zu einem geschlossenen Hohlraum abgedeckt ist, wobei die jeweilige Bohrung (15) der jeweiligen Abdeckscheibe (12) mit dem der jeweiligen Abdeckscheibe (12) zugeordneten Überströmkanalhälfte (8) in hydraulischer Verbindung steht.

2. Hydrolager (1) nach Anspruch 1, **dadurch gekennzeichnet, dass** die Drosselplatte (7) in den Bereichen, die für die Lage der Abdeckscheiben (12) vorbestimmt sind, jeweils eine Vertiefung (9) aufweist, deren Tiefe mit der Dicke der Abdeckscheiben (12) korrespondiert und deren Durchmesser mit den Durchmessern der Abdeckscheiben (12) korrespondiert und in die die Abdeckscheiben (12) jeweils eingelegt sind.

3. Hydrolager (1) nach Anspruch 2, **dadurch gekennzeichnet, dass** die Drosselplatte (7) zentrisch zu den Vertiefungen (9) jeweils Durchbrüche (10) aufweist und dass die Abdeckscheiben (12) zentrisch zu den Vertiefungen (9) jeweils Durchbrüche (14) aufweisen, und dass die Drosseleinrichtung (4) im Bereich der Durchbrüche (10) zwischen der Drosselplatte (7) und den Abdeckscheiben (12) jeweils eine Entkoppelungsmembran (11) aufweist.

4. Hydrolager (1) nach Anspruch 3, **dadurch gekennzeichnet, dass** die Abdeckscheiben (12) zentrisch im Bereich der Durchbrüche (10) jeweils eine Kröpfung (17) aufweisen.

5. Hydrolager (1) nach Anspruch 4, **dadurch gekennzeichnet, dass** die Abdeckscheiben (12) so angeordnet sind, dass ihre Kröpfung (17) beim Einlegen in die Drosselplatte (7) der jeweils korrespondierenden Entkoppelungsmembran (11) zugewandt sind.

6. Hydrolager (1) nach Anspruch 4, **dadurch gekennzeichnet, dass** die Abdeckscheiben (12) so angeordnet sind, dass ihre Kröpfung (17) beim Einlegen in die Drosselplatte (7) von der jeweils korrespondierenden Entkoppelungsmembranen (11) abgewendet ist.

7. Hydrolager (1) nach einem der Ansprüche 2 bis 6, **dadurch** g**ekennzeichnet**, **dass** die Abdeckscheiben (12) an ihrem Außenumfang radial nach außen ragende Verzahnungen aufweisen und das die Drosselplatte (7) im Bereich der Vertiefungen (9) für die Abdeckscheiben (12) eine radial nach innen in Richtung auf die Abdeckscheiben (12) gerichtete Verzahnung aufweist, wobei die jeweilige Verzahnung der Abdeckscheiben (12) und die jeweilige Verzahnung der Drosselplatte (7) bei eingelegten Abdeckscheiben (12) miteinander in Eingriff stehen.

8. Hydrolager (1) nach einem der Ansprüche 2 bis 7, **dadurch gekennzeichnet, dass** die in die Vertiefungen (9) der Drosselplatte (7) kann auf 12) eingelegten Abdeckscheiben zentrisch mit der Drosselplatte (7) verbunden sind, derart, dass sie nicht mehr von der Drosselplatte (7) abhebbar sind.

## Claims

1. A hydraulic bearing having a throttle device (4) and a working chamber (2) and a compensation chamber (3), wherein the chambers are filled with fluid, and the working chamber (2) is separated from the compensation chamber (3) by means of the throttle device (4), wherein the throttle device (4) has at least one overflow channel (8), by means of which the two chambers are connected to one another in a fluid-carrying manner, **characterized in that** the hydraulic bearing (1) has a substantially rectangular basic shape, wherein the throttle device (4) has a throttle plate (7) with an overflow channel (8) and two circumferentially rotatable cover disks (12) each with a bore (15), and the overflow channel (8) is designed in the form of an "8", and a first half (8) of the "8" is arranged on the upper face of the throttle plate (7) and a second half of the "8" is arranged on the lower face of the throttle plate (7), wherein each half (8) of the overflow channel (8) is closed at one end (8,) and is hydraulically connected at the opposite end (13) by the throttle plate (7) to the further overflow channel half (8), wherein the connection point (13) of the two overflow channel halves is located virtually at the intersection point of the "8" and the overflow channel halves (8) are opposite each other in projection along the longitudinal extent of the rectangular throttle plate (7), so that the rectangular shape of the throttle plate (7) is optimally utilized and each half of the overflow channel (8) is covered with a cover disk (12) to form a closed cavity, wherein the respective bore (15) of the respective cover disk (12) is hydraulically connected to the overflow channel half (8) associated with the respective cover disk (12).

2. The hydraulic bearing (1) according to claim 1, **characterized in that** the throttle plate (7) has a recess (9) in each of the regions which are predetermined for the position of the cover disks (12), the depth of which recess corresponds to the thickness of the cover disks (12) and the diameter of which recess corresponds to the diameters of the cover disks (12) and into which recess the cover disks (12) are inserted.

3. The hydraulic bearing (1) according to claim 2, **characterized in that** the throttle plate (7) has openings (10) centered on the recesses (9) and **in that** the cover disks (12) have openings (14) centered on the recesses (9) and **in that** the throttle device (4) has a decoupling membrane (11) in the region of the openings (10) between the throttle plate (7) and the cover disks (12).

4. The hydraulic bearing (1) according to claim 3, **characterized in that** the cover disks (12) each have an offset portion (17) centrally in the region of the openings (10).

5. The hydraulic bearing (1) according to claim 4, **characterized in that** the cover disks (12) are arranged such that their offset portion (17) is oriented toward the respective corresponding decoupling membrane (11) when inserted into the throttle plate (7).

6. The hydraulic bearing (1) according to claim 4, **characterized in that** the cover disks (12) are arranged such that their offset portion (17) is turned away from the respective corresponding decoupling membranes (11) when inserted into the throttle plate (7).

7. The hydraulic bearing (1) according to any one of claims 2 to 6, **characterized in that** the cover disks (12) have radially outwardly projecting toothings on their outer periphery, and wherein the throttle plate (7), in the region of the recesses (9) for the cover disks (12), comprises a toothing directed radially inward toward the cover disks (12), wherein the respective toothing of the cover disks (12) and the respective toothing of the throttle plate (7) are in engagement with each other when the cover disks (12) are inserted.

8. The hydraulic bearing (1) according to any one of claims 2 to 7, **characterized in that** the cover disks (12) inserted into the recesses (9) of the throttle plate (7) can be connected centrally to the throttle plate (7) in such a way that they are no longer removable from the throttle plate (7).

## Revendications

1. Palier hydraulique comportant un dispositif d'étranglement (4), une chambre de travail (2) et une chambre de compensation (3), les chambres étant remplies de fluide, et la chambre de travail (2) étant séparée de la chambre de compensation (3) par le dispositif d'étranglement (4), le dispositif d'étranglement (4) présentant au moins un canal de trop-plein (8) au moyen duquel les deux chambres sont reliées entre elles de manière à permettre la circulation du fluide, **caractérisé en ce que** le palier hydraulique (1) présente une forme de base essentiellement rectangulaire, le dispositif d'étranglement (4) présentant une plaque d'étranglement (7) comportant le canal de trop-plein (8) et deux couvercles (12) pouvant tourner dans le sens circonférentiel, comportant respectivement un alésage (15), et le canal de trop-plein (8) étant réalisé sous la forme d'un « 8 » et une première moitié (8) du « 8 » est agencée sur la face supérieure de la plaque d'étranglement (7) et une seconde moitié du « 8 » est agencée sur la face inférieure de la plaque d'étranglement (7), chaque moitié (8) du canal de trop-plein (8) étant fermée à une extrémité (8) et en liaison active hydraulique, à l'extrémité opposée (13), avec l'autre moitié de canal de trop-plein (8) par l'intermédiaire de la plaque d'étranglement (7), le point de jonction (13) des deux moitiés de canal de trop-plein se situant quasiment au point d'intersection du « 8 » et les moitiés de canal de trop-plein (8) se faisant face en projection dans le sens longitudinal de la plaque d'étranglement (7) rectangulaire, de telle sorte que la forme rectangulaire de la plaque d'étranglement (7) est exploitée de manière optimale et chaque moitié du canal de trop-plein (8) est recouverte d'un couvercle (12) formant une cavité fermée, l'alésage (15) respectif du couvercle (12) respectif étant en liaison hydraulique avec la moitié de canal de trop-plein (8) associée au couvercle (12) respectif.

2. Palier hydraulique (1) selon la revendication 1, **caractérisé en ce que** la plaque d'étranglement (7) présente respectivement un évidement (9) dans les zones qui sont prédéfinies pour la position des couvercles (12), dont la profondeur correspond à l'épaisseur des couvercles (12) et dont le diamètre correspond aux diamètres des couvercles (12) et dans lequel les couvercles (12) sont insérés.

3. Palier hydraulique (1) selon la revendication 2, **caractérisé en ce que** la plaque d'étranglement (7) présente respectivement des ouvertures traversantes (10) centrées sur les évidements (9) et **en ce que** les couvercles (12) présentent respectivement des ouvertures traversantes (14) centrées sur les évidements (9) et **en ce que** le dispositif d'étranglement (4) présente respectivement une membrane de découplage (11) dans la zone des ouvertures traversantes (10) entre la plaque d'étranglement (7) et les couvercles (12).

4. Palier hydraulique (1) selon la revendication 3, **caractérisé en ce que** les couvercles (12) présentent respectivement un coude (17) centré dans la zone des ouvertures traversantes (10).

5. Palier hydraulique (1) selon la revendication 4, **caractérisé en ce que** les couvercles (12) sont agencés de telle sorte que leur coude (17) est tourné vers la membrane de découplage (11) respectivement correspondante lorsqu'ils sont insérés dans la plaque d'étranglement (7).

6. Palier hydraulique (1) selon la revendication 4, **caractérisé en ce que** les couvercles (12) sont agencés de telle sorte que leur coude (17) est tourné à l'opposé des membranes de découplage (11) respectivement correspondantes lorsqu'ils sont insérés dans la plaque d'étranglement (7).

7. Palier hydraulique (1) selon l'une des revendications 2 à 6, **caractérisé en ce que** les couvercles (12) présentent une denture en saillie radialement vers l'extérieur sur leur circonférence extérieure et **en ce que** la plaque d'étranglement (7) présente une denture dirigée radialement vers l'intérieur en direction des couvercles (12) dans la zone des évidements (9) pour les couvercles (12), la denture respective des couvercles (12) et la denture respective de la plaque d'étranglement (7) venant en prise l'une avec l'autre lorsque les couvercles (12) sont insérés.

8. Palier hydraulique (1) selon l'une des revendications 2 à 7, **caractérisé en ce que** les couvercles (12) insérés dans les évidements (9) de la plaque d'étranglement (7) sont reliés de manière centrée à la plaque d'étranglement (7), de façon à ne plus pouvoir être retirés de la plaque d'étranglement (7).
